# EUROPEAN PATENT SPECIFICATION

(11) **EP 0 334 569 B1**
(45) Date of publication and mention of the grant of the patent: **10.01.1996**
(21) Application number: 89302705.2
(22) Date of filing: 20.03.1989
(51) Int. Cl.: H04J 3/06

(54) **Method of and system for transmitting information**
Anordnung und Verfahren zur Informationsübertragung
Procédé et système pour la transmission d'information

(30) Priority: 21.03.1988 US 170968
(43) Date of publication of application: 27.09.1989
(73) Proprietor: FIRST PACIFIC COMMUNICATIONS CORPORATION, Sunnyvale California 94086 (US)
(72) Inventor: McNamara, Robert P., San Jose California 95136 (US); Marquart, Donald G., San Mateo California 94404 (US)
(74) Representative: Jones, Ian

(56) References cited:
- EP-A- 0 188 117
- EP-A- 0 229 684
- US-A- 4 411 007

## Description

The invention relates to a method of transmitting information and to a system for transmitting information, typically a local area network communication system using time-division multiplexing.

Many offices today use a network for the transmission of data between computer terminals and other devices within the office. For voice communications, a private branch exchange (PBX) typically is used. In a private branch exchange, all telephones are connected to a central switching device which interconnects the various extensions and provides a connection to the outside public switched network. Such a network is disclosed, for example, in EP-A-0 188 117.

For data communications, several different architectures used. In a star network, all the terminals are coupled to a central point of the star, which provides centralized control of the flow of data. The central control on such a system can time-division multiplex data from different terminals by alternately holding data from one or the other transmitting terminal in a buffer until its timeslot is available. The central control unit provides the synchronization necessary to insert the data into the respective time slots. Unfortunately, the star network suffers from several disadvantages. The bandwidth available through the switch matrix is limited, as well the integrity of the data passing through the switch. Furthermore, it is difficult to lay out the wires, because a new wire from the central control to the telephone must be laid each time a new telephone is added. In addition, a failure of the centralized control system disables the entire system.

Another data system architecture, and one which is easier to lay out, is a ring network. In a ring network, a single cable passes through each and every data terminal, and thus, network bandwidth is shared. Rather than rely on assigned time slots or the acquisition of time slots, bandwidth multiplexing employs the token method. In this method, a token is passed from one terminal to another, with the terminal desiring to transmit holding onto the token. A terminal cannot transmit unless it has the token, and therefore only one terminal will be transmitting at a time. This type of time-division multiplexing thus transmits data in irregular bursts, rather than regular assigned timeslot lengths. This type of transmission is appropriate for data communications, which typically occur in infrequent, long bursts. Voice communications, on the other hand, require a continuous connection over an extended period of time.

An alternative architecture for preventing errors due to two users attempting to acquire the network bandwidth simultaneously is used in the Ethernet system. In this system, before a terminal may transmit it listens to see if the network bandwidth is being used. Then while transmitting, the data terminal listens to determine if the data transmitted is received in the same form. If the received data differs, then another terminal transmitted at the same time, resulting in a collision and thus scrambled data. The transmitting station then stops transmitting and retransmits a random amount of time later. Thus, central control of the network bandwidth acquisition of timeslots is not needed. Because data transmissions occur infrequently, the chances of a collision on the second transmission are low. The chance of a collision increase as the number of terminals coupled to the system increases. Such a system is ill suited for voice traffic since the number of collisions will increase for voice communications which require continuous transmissions over an extended period of time. Additionally, the delay through the network is not fixed.

One approach which combines voice and data not using the private branch exchange is disclosed in U.S. Patent No. 4,470,140 to Coffey, entitled "Distributed Switching Network (DSN)." The DSN system is built around a multiple bus network. In the DSN system, the communication media consists of twisted pair. For the network to operate properly, at least three pairs of cabling must be laid out. This cabling acts as the backbone for the DSN system. One pair is used for transmitting information toward the Line Group Central Shelf and the other two pairs are used in a loop back arrangement for receiving transmissions from either other units or remote units through the Line Group Central Shelf. Each transmit and receive line is subdivided into frames and further subdivided into timeslots. Communication between any two units in this network requires that each unit seize a timeslot for its own transmission needs and that it receive and read the timeslot of the other to provide two way communication. One of the major assumptions of the DSN system is that the buses are synchronous, that is, no allowances are made on the bus for signaling overhead or time of flight. Each timeslot has been partitioned to accept one byte of information, and thus, there is no room for timing errors.

The DSN system itself consists of two major units, Parallel Access Communications Interface Blocks (PIBs) and the Line Group Central Shelf. The PIBs are used to interface communication equipment to the network. The PIBs are connected in parallel across the transmit lines and across the upstream portion of the looped back receive lines. The implication of the parallel access is significant in that when a PIB transmits onto the common transmit bus, the transmission is sent both upstream and downstream. The Line Group Interface Shelf (LGIS) is the terminus point for all of the cabling in the DSN System. The LGIS provides network timing, switching between transmit and receive lines, switching between in-house calls and the Public Switched Telephone Network, as well as all of the network control functions.

When a PIB wishes to transmit information, two events occur. The PIB Transmit Line first derives timing information so as to identify when to transmit on the transmit bus. This timing information is generated by the Line Group Central Shelf and sent out on the receive line. By examining the status of the receive and the transmit lines, the PIB is able to ascertain that a particular timeslot is available. This determination of whether a timeslot is available is completely dependent on the parallel connection of the PIB to both the transmit and receive lines.

The present invention provides a network having a wide bandwidth communications channel. This channel is organized architecturally as a time-ordered bus. All the nodes of the system are coupled to both the transmitting medium and the receiving medium. The network bandwidth is subdivided into timeslots. Time slots are defined by a timing mark generator, with each node detecting the timing marks on only the receiving medium. The time between each timing mark defines a frame, with each frame consisting of a plurality of time slots. In this network, each node may be a different physical distance from a central turnaround point or head end, resulting in each node transmitting in a different time relative to the received timing mark due to the differences in transmission time to the head end and back. Accordingly, each node transmits a test signal and measures the time after the transmission until it receives the test signal back again. This time, designated a skew time, is used for transmissions of information. In all subsequent transmissions, each node transmits at a time equal to the skew time in advance of the time slot it is attempting to transmit into.

The network employed in this invention is medium independent. In one embodiment, the transmission medium is a broadband CATV cable with a transmitting and receiving channel defined by different frequency bands. The head end of the system includes a frequency translator for translating the transmitted signal from the transmitting channel onto the receiving frequency band of the receiving channel. The system permits multiple channels, increasing the number of users that can be attached to the system. Information is transmitted asynchronously within a timeslot, thus eliminating the need for precise synchronization to place a transmission packet within a specified timeslot. Each channel may contain a plurality of signaling timeslots and voice transmission timeslots. Each frame preferably has a first portion assigned for signaling packets and then a plurality of timeslots for voice communications. When one node desires to call another, an identifying signal is transmitted in the signaling portion of the time-divided channel and is designated the signaling channel. When the called node receives the signal, it transmits an acknowledgment signal in the signaling portion. The calling node then signals a specified timeslot in which digitized voice or data is to follow. Either node may direct the other node to switch to another timeslot or channel for communication. This may be done, for instance, where one channel is extremely busy. Preferably, for two-way voice communication, the first node would transmit in the specified timeslot in every other frame, with the second node transmitting in the frames in between.

Data and digitized voice are both sent in the same manner, thus simplifying the circuitry required. The signaling channel employs a slotted ALOHA type collision detection system, with each node monitoring on the receiving line to determine if the signal transmitted is received in the same form. If a collision is detected, the node waits for a random amount of time and attempts to transmit again. Collisions within voice timeslots employ an ALOHA collision technique whereby a test signal is inserted into a supposedly vacant timeslot and the received signal is compared with the original. If the test signal is returned undamaged, the timeslot is considered seized. If an error is detected, the node waits, seizes another timeslot and the process continues again. Before transmitting, the node must determine that the timeslot is available for a series of frames. Once a node has acquired a timeslot by transmitting in it, it will retain that timeslot for the duration of the communication. Other nodes will detect data being transmitted in that timeslot, and will not attempt to acquire that timeslot.

The invention is further described below, by way of example, with reference to the accompanying drawings, in which:
Figure 1 is a block diagram of a communication system according to the present invention;
Figure 2 is a schematic diagram of the frequency translation performed by the head end retransmission unit of Figure 1;
Figure 3 is a schematic diagram illustrating the transmission time differences to the head end retransmission unit;
Figure 4 is a block diagram of the circuitry for a connection at a node of the system of Figure 1;
Figure 5 is a schematic of the circuitry for a telephone connection at a node of the system of Figure 1;
Figure 6 is a timing diagram showing time-division multiplexing according to the present invention; and
Figure 7 is a diagram of the different frequency channels utilized in a communication system according to the present invention.

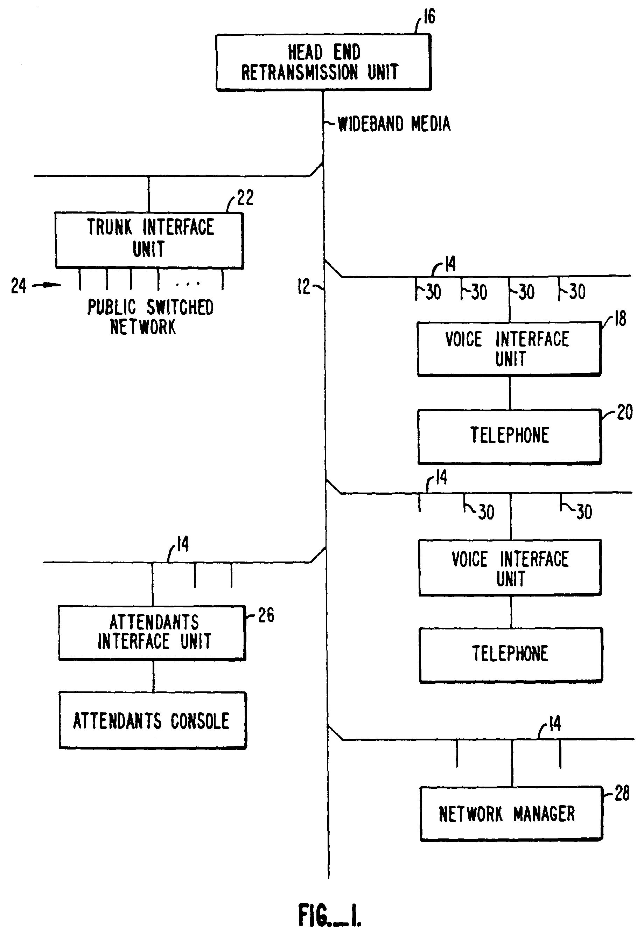

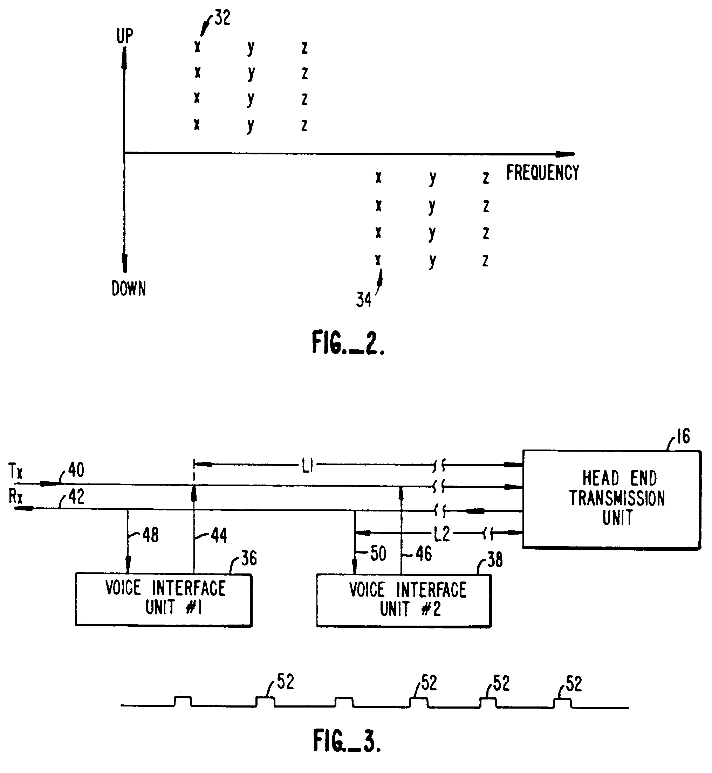

Figure 1 shows a communication system in which a wideband media (preferably broadband coaxial or fiber optic cables) 12 having a plurality of branches 14 is coupled to a head end retransmission unit (HRU) 16. Although topologically a tree structure, the network is logically organized as a time ordered bus as shown in Figure 3.

Several voice interface units (VIU) 18, each coupled to a telephone 20, are shown. Also shown is a trunk interface unit (TIU) 22 having a plurality of trunk lines 24 for coupling to the public switched network. A complete system typically will have a large number of voice interface units 18 and may have several trunk interface units 22. In addition, two service nodes are provided and are designated the attendant's interface unit 26 and the network manager's node 28.

In the preferred embodiment, a frequency translation is performed by the head end retransmission unit (HRU) 16 of Figure 1 is shown in Figure 2. Transmitting signals from the various nodes 30 of Figure 1 are received by HRU 16 in a first frequency band 32. HRU 16 translates these signals onto a second frequency band 34 and transmits the signals along the broadband cable back to all of the nodes. Frequency bands 32 and 34 are each preferably 6 megaHertz (mHz) wide. Additional channels may be added for other data transmissions or additional voice channels. The transmitting channels are preferably in the range from 5 to 108 MHz, while the receiving channels are in the range from 174 to 400 MHz. This is the midsplit format for frequency division multiplexing used by most broadband local area networks.

In the most general case, the HRU receives signals on upstream leg of the network and rebroadcasts them on the downstream leg of the network. The HRU provides a constant phase data signal to the downstream frequency band by adding fractional bit delay to upstream packets, as their relative phase upon reaching the HRU varies with the VIU's physical position on the network, and by inserting a pseudo-silence pattern for times in which there is no upstream data. The HRU uses a digital phase-locked loop (DPLL), well known in the art, to insert this variable fractional bit delay.

A phase-locked loop (PLL) located in the VIU modem recovers the system clock from this downstream signal, and the Receiver/Transmitter circuit uses that clock for receiving downstream data as well as transmitting upstream data.

Figure 3 shows a pair of voice interface units (VIUs) 36 and 38. The frequency band 32 (from Figure 2) on broadband cable 12 is shown schematically as a transmission line 40, with frequency band 34 being shown as a receiving line 42. Each of VIUs 36 and 38 transmits in band 32 (line 40) as shown by arrows 44, 46. Similarly, each of VIUs 36 and 38 receives signals in a frequency band 34 (line 42) as shown by arrows 48, 50. A series of timing marks 52 which appear in frequency band 34 are shown beneath line 42 in Figure 3.

As can be seen, VIU 36 is a distance L1 from HRU 16, while VIU 38 is a distance L2 from HRU 16. If VIU 36 attempted to transmit in a timeslot defined to begin N microseconds after a timing mark 52 by actually starting the transmission N microseconds after the timing mark is detected, the transmission would actually be received by VIU 36 at a time t(skew) later. Time t(skew) is (2*L₁/C)+t₀, where L₁ is the distance to HRU 16, C is the speed of the signal on the transmission medium and t ₀is any delay incurred through the HRU. A transmission from VIU 38, on the other hand, will be delayed by (2*L2/C)+t₀. Accordingly, data transmitted by VIU 36 will actually fall farther behind timing mark 52 than data transmitted by VIU 38.

This problem has been solved in the past by using a clock on the transmit line as in the ring network, or using the parallel transmit clock as in the Coffey patent discussed earlier. According to the present invention, each VIU upon booting up will determine its particular skew time by transmitting a test data packet and calculating the amount of time before it receives the test data packet. This time then is designated as a skew time, and each information packet transmitted thereafter will be transmitted an amount of time equal to the skew time earlier than the time that the specified timeslot will be detected on receiving line 42 at that particular VIU. Test packet are transmitted immediately after the reception of the frame timing mark. For example, if a VIU determines a skew time of 38 microseconds, this represents a network of approximately 3 miles in radius (assuming a delay of 6.25 microseconds per mile for an electromagnetic wave in the coaxial medium).

Timing marks 52 are preferably generated by a timing mark generator located within HRU 16 of Figure 1 or in a separate timing mark generator which is coupled to some point along transmission line 40. The timing mark generator can be at any location on cable 12, but must broadcast within frequency band 32 as shown in Figure 2. The timing marks then will be translated into frequency band 34 by HRU 16. The transmissions within frequency band 32 will be unnoticed by any of the other nodes since they are not receiving in that frequency band.

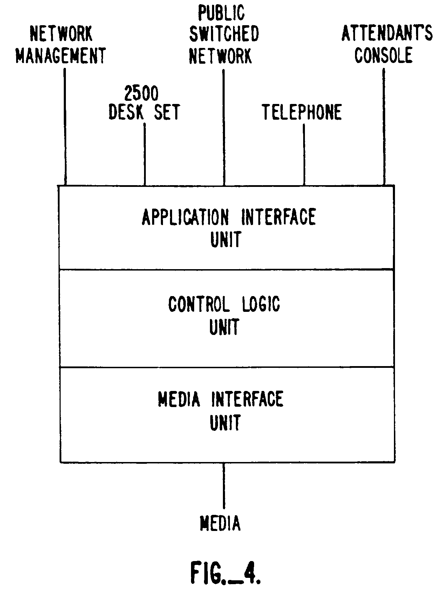

Figure 4 is a block diagram of the circuitry of any node connected to the system. A media interface unit couples the node to the media and to the control logic. An application interface unit couples the particular application to the control logic and the media. This core technology makes modularity possible and drastically reduces the complexity and time required for new application product development, enabling delivery of high quality, reliable products far more quickly.

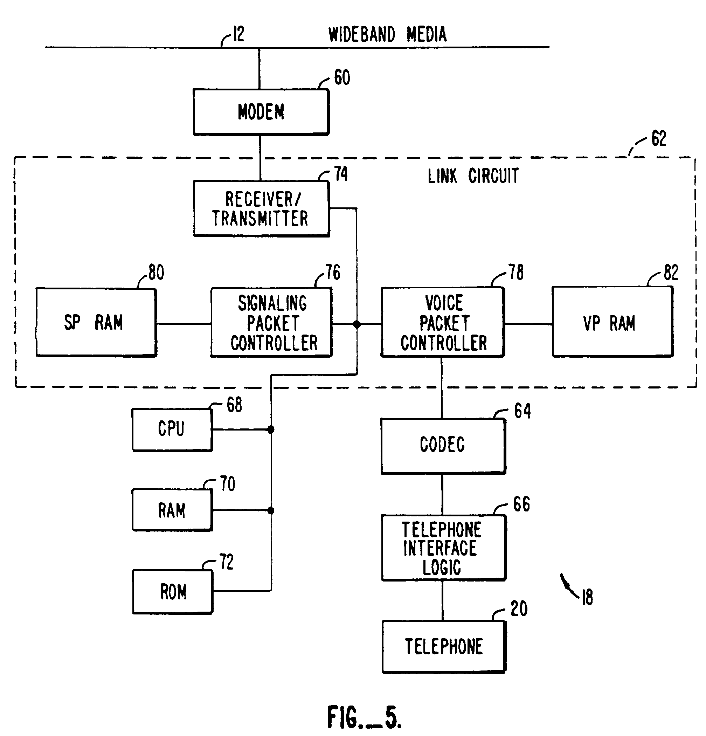

Figure 5 is a Schematic diagram of a Voice Interface Unit according to the present invention. A modem 60 which acts as the media interface unit is coupled to a broadband cable system and to a link circuit 62. The link circuit 62 is coupled to a telephone through a Codec (coder/decoder) 64 and a telephone interface circuit 66. Link circuit 62 is controlled by a CPU with its associated RAM and ROM. The link circuit consists of a Receiver/Transmitter (RxTx), a Packet Controller (PCTL), and a Packet RAM (PRAM). In this arrangement the Codec and telephone interface logic act as Application Interface Unit. The Link circuit, CPU, RAM, and ROM function as the node control logic unit.

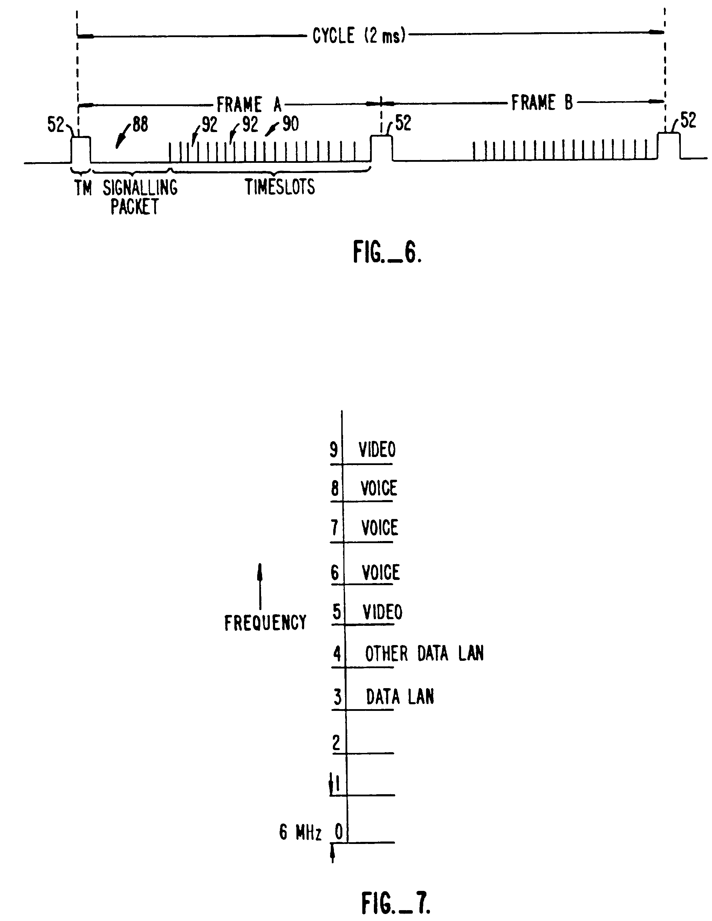

The operation of the Voice Interface Unit can be understood by reference to the timing diagram of Figure 6. A timing mark 52, transmitted by a Timing Mark Generator Unit, is broadcast once per millisecond, establishing the link frame structure. Each VIU's RxTx circuit, after checking the timing marks for integrity, locks its internal counters to the framing established by the timing marks.

The VIU's CPU commands the RxTx and PCTL circuits to send signaling packets in the timeslot immediately following the timing mark. RxTx measures the skew time of the first such SP and adjusts its transmit frame to start (SKEW) bits before the next timing mark is received (i.e., before its receive frame starts). Thus, any signaling or voice packets transmitted by a VIU will appear at the HRU at the correct instant referenced to the timing mark.

The RxTx circuit monitors each incoming timeslot, and by detecting the presence or absence of a packet delimiter, determines whether the timeslot is vacant or occupied. It gives this information to the PCTL circuit, which maintains a table of this information in the PRAM. The PRAM is dual-ported between PCTL and the CPU; thus, the CPU can read these tables and select a vacant timeslot when it needs to establish a connection.

A VIU's CPU claims a voice timeslot by commanding the RxTx to send a single claiming voice in the forward half of a timeslot packet in that timeslot and ensuring that no other VIU was attempting to simultaneously claim the same timeslot. The RxTx circuit ensures this by comparing the packet transmitted to the packet received and checking for equality. All other units on the network see the claiming voice packet on the timeslot being claimed, and thus change that timeslot's status from vacant to occupied in their PRAM-resident timeslot vacant/occupied table.

Once a timeslot has been claimed, the CPU can command the PCTL circuit to establish a digital connection between a network voice timeslot and a codec. The RxTx circuit receives and frames the incoming serial pulse code modulation data samples from the network during the selected timeslot, performs a serial to parallel conversion, and gives the samples to the PCTL circuit. The PCTL circuit then buffers the data in PRAM-resident ring buffers, and sends data bytes as required to the codec.

In the reverse direction, the codec supplies PCM data samples to the PCTL circuit, which buffers them in PRAM-resident ring buffers until the time they must be transmitted via a network voice packet. The PCTL circuit then retrieves these samples from PRAM and passes them to the RxTx circuit, which appends a preamble and delimiter (for proper framing at the packet destination), performs a parallel to serial conversion, and transmits the information to the network during the selected timeslot.

Additionally, the PCTL circuit supplies tones as required to the codec (dial tone, ring back tone, busy tone, DTMF tones, etc.) from PRAM-resident buffers containing the tones' digital samples. PCTL also uses PRAM-resident look-up tables to amplify or attenuate signals as required by a system loss plan.

In operation, when a user picks up telephone 20 and dials a number, CPU 68 detects this dialing and instructs signaling packet controller 76 to transmit a call request signaling packet addressed to the network address of the number dialed. The number called may be another VIU in the network or an outside number which is accessed by first addressing a trunk interface unit 22. Each node, or voice interface unit, has an address in the network which is stored in ROM 72. Packet controller 76 transmits the call request signaling packet in an empty signaling packet area 88 and does collision detection to determine if the transmission was successful. The call request signaling packet will designate a timeslot for reply. The frames are then monitored to determine whether an acknowledgment signal is received from the called node. The network element at the called node will read the call request signaling packet addressed to it and respond by transmitting a reply in the reverse frame of the designated timeslot. As shown in Figure 6, the receiving network node is always transmitting in frame B, while the transmitting node uses frame A. Each of frames A and B occur once each cycle. If an acknowledgment signal is received, transmission of the digitized voice signals begins in the designated timeslot. The calling node transmits in each frame A, while the called node transmits in each intervening frame B.

Each network node has a numerical address. In a multichannel system, a signaling packet is sent to all channels (sequentially) on the network. The response of the called network node may be that it is busy with another communication, that it is ready to accept transmission, or that the calling node should switch to another channel for transmission. This provides a distributed ability to switch between channels, eliminating the need for a central bridge to connect channels.

Figure 7 is a diagram of the various channels used in a preferred embodiment of the communication system according to the present invention. As shown, a number of channels can be used for voice transmission with other channels being assigned to video or data transmissions for particular local area networks. Each channel has a receive and transmit portion, each 6 megahertz in width, with the transmit and receive channels being separated in frequency as discussed earlier.

As will be understood by those familiar with the art, the present invention may be embodied in other specific forms without departing from the spirit or essential characteristics thereof. For example, instead of broadband coaxial cable, fiber optic, infrared or other transmission mediums may be utilized. Alternately, instead of voice and data being separated on different channels, voice and data can be transmitted in alternate time slots on the same channel. Also, the network could be configured and operated in such a fashion that each node is assigned a specific timeslot and that one or several other nodes act as a central demultiplex point. In this case the network operates as a distributed, geographically separated, multiplexor. Accordingly, the disclosure of the preferred embodiments of the invention is intended to be illustrative, but not limiting, of the scope of the invention which is set forth in the following claims.

## Claims

1. A method of transmitting information from a node (30) in a specified timeslot in a time-division multiplexed communication system having a unidirectional transmitting bus (12) terminating at a head end (16) and translated at the head end onto a unidirectional receiving bus originating from the head end, the method comprising the steps of:
transmitting a test signal on the transmitting bus from the node, the step of transmitting being initiated by a device coupled to the time-division multiplexed communication system at the node;
receiving the test signal from the receiving bus at the node;
calculating, at the node, the elapsed time between the transmitting and receiving steps; and
transmitting an information signal an amount of time equal to the elapsed time prior to a time of arrival of the timeslot on the receiving bus at the node.

2. A method as claimed in claim 1 comprising the steps of digitising a voice signal to produce the information signal.

3. A method as claimed in claim 1 or 2 wherein the step of transmitting an information signal step includes asynchronously transmitting the information within the timeslot.

4. A method as claimed in claim 1, 2 or 3 comprising the steps of:
generating a periodic timing mark, with the periods between the timing marks being frames, each frame having a plurality of timeslots;
transmitting information signals to a second node in the specified timeslot in first frames, the first frames occurring every other frame; and
receiving information signals from the second node in the specified timeslot in second frames, the second frames occurring between the first frames.

5. A method as claimed in claim 4 wherein the step of generating a periodic timing mark includes receiving a timing signal from a public switched network and using the public switched network timing signal to produce the timing marks.

6. A communication system for exchanging information between a plurality of nodes (30), comprising:
a unidirectional transmitting medium (12) coupling each of the nodes to a head end (16) of the transmitting medium;
a unidirectional receiving medium (12) extending from an originating end to each of the nodes;
head end translating means for transferring signals received at the head end of the transmitting medium to the receiving medium;
means for generating a periodic timing mark on the receiving medium, each interval between a pair of timing marks being a frame, each frame defining a plurality of timeslots;
means for transmitting a test signal from a first node on the transmitting medium, in response to a skew timing calculation request made at the node;
means for receiving the test signal at the first node on the receiving medium;
means for calculating, at the first node, an elapsed skew time between the transmitting and receiving of the test signal; and
means for transmitting information from the first node for a specified timeslot an amount of time equal to the skew time prior to the arrival of the specified timeslot at the receiving means.

7. A communication system as claimed in claim 6 comprising means coupled to the first node for digitising a voice signal to produce the information.

8. A communication system as claimed in claim 6 or 7 wherein the transmitting medium and the receiving medium are separate frequency channels on a single physical medium and the translating means is a frequency translator.

9. A communication system as claimed in claim 8 comprising a plurality of means for digitising voice signals, each digitising means being coupled to one of the nodes (30), each of the nodes having a separate address, and a plurality of memories, each coupled to one of the nodes for storing the addresses of the nodes.

10. A communication system as claimed in claim 8 or 9 comprising a plurality of transmitting and receiving channels on the physical medium, each of the nodes having means for transmitting and receiving on more than one channel.

## Patentansprüche

1. Ein Verfahren für die in einem bestimmten Zeitschlitz zu erfolgende Übertragung von Informationen von Knoten (30) eines Zeitmultiplex-Kommunikationssystems mit unidirektionalem Übertragungsbus (12), der durch Kopfende (16) abgeschlossen wird und an diesem Kopfende in einen unidirektionalen Empfangsbus mit Ursprung vom Kopfende umgewandelt wird, wobei dieses Verfahren folgende Stufen aufweist:
Übertragung eines Testsignals vom Knoten über den Übertragungsbus, wobei die Übertragungsstufe durch eine Vorrichtung ausgelöst wird, die über den Knoten an das Zeitmultiplex-Kommunikationssystem gekoppelt ist;
Empfang des Testsignals über den Empfangsbus am Knoten;
die am Knoten vorgenommene Berechnung der zwischen den Übertragungs- und Empfangsstufen abgelaufenen Zeit; und
Übertragung eines Informationssignals in einem der abgelaufenen Zeit gleichen Zeitraum, ehe sich der Zeitschlitz auf dem Empfangsbus am Knoten einstellt.

2. Ein Verfahren entsprechend Anspruch 1, zu dem die Stufe gehört, ein Sprachsignal zwecks Erzeugung des Informationssignals zu digitalisieren.

3. Ein Verfahren entsprechend Anspruch 1 oder 2 mit einer Stufe zur Übertragung eines Informationssignals, die die asynchrone Übertragung der Informationen in dem Zeitschlitz umfaßt.

4. Ein Verfahren entsprechend Ansprüchen 1, 2 oder 3, das folgende Stufen aufweist:
Erzeugung einer periodischen Taktmarke, wobei die Perioden zwischen den Taktmarken Rahmen bilden und jeder Rahmen eine Mehrzahl von Zeitschlitzen aufweist;
Übertragung von Informationssignalen an einen zweiten Knoten in dem bestimmten Zeitschlitz in den ersten Rahmen, wobei die ersten Rahmen jeweils im Wechsel mit einem anderen Rahmen auftreten; und
Empfang der Informationssignale des zweiten Knotens in dem bestimmten Zeitschlitz in den zweiten Rahmen, wobei die zweiten Rahmen jeweils im Wechsel mit den ersten Rahmen auftreten.

5. Ein Verfahren entsprechend Anspruch 4, bei dem die Stufe zur Erzeugung einer periodischen Taktmarke den Empfang eines Taktsignals von einem öffentlichen Netz einschließt und die Taktmarken anhand des Taktsignals des öffentlichen Netzes zu erzeugen.

6. Eine Kommunikationssystem zum Informationsaustausch zwischen einer Mehrzahl von Knoten (30), das folgendes umfaßt:
ein unidirektionales Übertragungsmedium (12), durch welches jeder Knoten jeweils an Kopfende (16) des Übertragungsmediums gekoppelt wird;
ein unidirektionales Empfangsmedium (12), das sich von einem Ursprungsende zu jedem Knoten erstreckt;
Kopfende-Umwandlungsmittel für die Weiterleitung der am Kopfende des Übertragungsmediums empfangenen Signale an das Empfangsmedium;
Mittel zur Erzeugung einer periodischen Taktmarke am Empfangsmedium, wobei jedes Intervall zwischen einem Paar Taktmarken ein Rahmen ist und jeder Rahmen eine Mehrzahl von Zeitschlitzen bildet;
Mittel zur Übertragung eines Testsignals von einem ersten Knoten am Übertragungsmedium in Reaktion auf eine am Knoten geforderte Kalkulation des Laufzeitunterschieds;
Mittel zum Empfang des Testsignals am ersten Knoten des Empfangsmediums;
Mittel zu der am ersten Knoten vorzunehmenden Kalkulation des abgelaufenen Laufzeitunterschied zwischen der Übertragung und dem Empfang des Testsignals; und
Mittel zur Übertragung der Informationen für einen bestimmten Zeitschlitz von dem ersten Knoten in einer dem Laufzeitunterschied gleichen Zeit, ehe sich der bestimmte Zeitschlitz am Empfangsmedium einstellt.

7. Ein Kommunikationssystem entsprechend Anspruch 6 mit an den ersten Knoten gekoppelten Mitteln zur Digitalisierung eines Sprachsignals, um die Information zu erzeugen.

8. Ein Kommunikationssystem entsprechend Anspruch 6 oder 7, dessen Übertragungsmedium und Empfangsmedium separate Frequenzkanäle auf einem einzigen Substanzmedium sind, während das Umwandlungsmittel ein Frequenzumsetzer ist.

9. Ein Kommunikationssystem entsprechend Anspruch 8, mit einer Mehrzahl von Mitteln zur Digitalisierung von Sprachsignalen, wobei jedes Digitalisierungsmittel an einen der Knoten (30) gekoppelt ist und jeder Knoten jeweils eine separate Adresse und eine Mehrzahl von Speichern hat, die zur Speicherung der Knotenadressen jeweils an einen der Knoten gekoppelt sind.

10. Ein Kommunikationssystem entsprechend Anspruch 8 oder 9, mit einer Mehrzahl von Übertragungs- und Empfangskanälen auf dem Substanzmedium, wobei jeder Knoten jeweils über Mittel verfügt, um auf mehr als einem Kanal übertragen und empfangen zu können.

## Revendications

1. Méthode de transmission de l'information à partir d'un noeud (30), dans un intervalle de temps particulier, sur un système de communication à multiplexage temporel comportant un bus de transmission unidirectionnel (12) qui aboutit à une tête de réseau (16), avec transposition en fréquence à la tête de réseau en direction d'un bus de réception unidirectionnel partant de la tête de réseau, la méthode comportant les étapes qui consistent à:
transmettre un signal d'essai sur le bus de transmission à partir du noeud, l'étape de transmission étant mise en route par un dispositif couplé au système de communication à multiplexage temporel au niveau du noeud;
recevoir le signal d'essai à partir du bus de réception au niveau du noeud;
calculer, au niveau du noeud, le temps qui s'est écoulé entre les étapes de transmission et de réception; et
transmettre un signal d'information pendant une période égale au temps qui s'est écoulé avant le moment d'arrivée de l'intervalle de temps sur le bus de réception au niveau du noeud.

2. Méthode, selon la revendication 1, comportant les étapes qui consistent à numériser un signal vocal pour produire le signal d'information.

3. Méthode, selon la revendication 1 ou 2, par laquelle l'étape de transmission d'un signal d'information comprend la transmission asynchrone de l'information dans l'intervalle de temps.

4. Méthode, selon la revendication 1, 2 ou 3, comportant les étapes qui consistent à:
produire un repère de temps périodique, les périodes entre les repères de temps étant des trames, chaque trame comportant plusieurs intervalles de temps;
transmettre des signaux d'information vers un deuxième noeud dans l'intervalle de temps spécifié dans des premières trames, ces premières trames se présentant toutes les deux trames; et
recevoir des signaux d'information venant du deuxième noeud dans l'intervalle de temps spécifié dans des deuxièmes trames, ces deuxièmes trames se présentant entre les premières trames.

5. Méthode, selon la revendication 4, par laquelle l'étape de production d'un repère de temps périodique comprend, entre autres, la réception d'un signal de synchronisation venant d'un réseau public commuté, et l'utilisation du signal de synchronisation du réseau public commuté pour produire les repères de temps.

6. Système de communication pour l'échange d'information entre plusieurs noeuds (30), comportant:
un support de transmission unidirectionnel (12) couplant chacun des noeuds à une tête de réseau (16) du support de transmission;
un support de réception unidirectionnel (12) s'étendant entre une extrémité de départ et chacun des noeuds;un moyen de transposition en tête de réseau pour transférer, au support de réception, les signaux reçus en tête de réseau du support de transmission;
un moyen servant à produire un repère de temps périodique sur le support de réception, chaque intervalle entre une paire de repères de temps étant une trame, chaque trame définissant plusieurs intervalles de temps;
un moyen servant à transmettre un signal d'essai à partir d'un premier noeud au support de transmission, à la suite d'une demande de calcul de temps d'obliquité faite au niveau du noeud;
un moyen servant à recevoir le signal d'essai au premier noeud du support de réception;
un moyen servant à calculer, au premier noeud, un temps d'obliquité écoulé entre la transmission et la réception du signal d'essai; et
un moyen servant à transmettre l'information à partir du premier noeud pour un intervalle de temps spécifié pendant une période égale au temps d'obliquité avant l'arrivée, au support de réception, de l'intervalle de temps spécifié.

7. Système de communication, selon la revendication 6, comportant des moyens couplés au premier noeud et servant à numériser un signal vocal pour produire l'information.

8. Système de communication, selon la revendication 6 ou 7, dans lequel le support de transmission et le support de réception sont des canaux de fréquences distincts sur un seul support physique, et le moyen de transposition est un traducteur de fréquence.

9. Système de communication, selon la revendication 8, comportant plusieurs moyens de numérisation des signaux vocaux, chaque moyen de numérisation étant couplé à l'un des noeuds (30), chaque noeud ayant une adresse distincte, et comportant aussi plusieurs mémoires, chacune d'elles couplée à l'un des noeuds, et servant à stocker les adresses des noeuds.

10. Système de communication, selon la revendication 8 ou 9, comportant plusieurs canaux de transmission et de réception sur le support physique, chacun des noeuds comportant des moyens de transmission et de réception sur plus d'un canal.
